# EUROPÄISCHE PATENTSCHRIFT

(11) **EP 2 907 707 B1**
(45) Veröffentlichungstag und Bekanntmachung des Hinweises auf die Patenterteilung: **08.04.2020**
(21) Anmeldenummer: 14155465.9
(22) Anmeldetag: 17.02.2014
(51) Int. Cl.: B60S 9/06

(54) **Nivellierungssystem**
Levelling system
Système de nivellement

(43) Veröffentlichungstag der Anmeldung: 19.08.2015
(73) Patentinhaber: Voithofer, Paul, 4400 Steyr (AT)
(72) Erfinder: Voithofer, Paul, 4400 Steyr (AT)
(74) Vertreter: Hoefer & Partner Patentanwälte mbB

(56) Entgegenhaltungen:
- EP-B1- 1 257 450
- WO-A1-2012/155280
- DE-U1- 20 003 180
- DE-U1- 29 724 436
- US-A1- 2008 315 538

## Beschreibung

Die vorliegende Erfindung betrifft ein Steuergerät ein Antriebssystem. Außerdem betrifft die Erfindung ein Benutzer-Endgerät, das mit einem derartigen Steuergerät verbindbar ist. Schließlich betrifft die Erfindung eine Verfahren zum Ansteuern des Antriebssystems sowie ein entsprechendes Computerprogrammprodukt.

Ein Wohnwagen oder ein Wohnmobil sollen an einem Campingplatz völlig eben stehen, um einen größtmöglichen Komfort zu gewährleisten. Bislang gibt es für diese Anwendung kein günstiges und vollautomatisches System.

Aus der WO 2012/155280 A1 ist eine Gerätestütze bekannt, die über eine Steuerung angesteuert wird. Die Steuerung ist mit einem Smartphone verbindbar, um so ein Bedienungsinterface zu erhalten. Die Gerätestütze benötigt jedoch einen aufwändigen mechanischen Freilauf um ein Verspannen des Spindelantriebs in einer Endlage der Gerätestütze zu vermeiden. Außerdem benötigt die Steuerung einen aufwändigen Controller, da dieser für die gesamte Ansteuerung der Gerätestütze verantwortlich ist. Eine andere Stützeinrichtung für Fahrzeuge ist aus der EP 1 257 450 B1 bekannt.

Es ist daher Aufgabe der Erfindung, ein Steuergerät für ein Antriebssystem einer Plattform und ein mit dem Steuergerät verbindbares Benutzer-Endgerät bereitzustellen, die bei einfacher und kostengünstiger Herstellbarkeit einen sicheren und zuverlässigen Betrieb ermöglichen. Weiterhin ist es Aufgabe der Erfindung, ein entsprechendes Verfahren anzugeben.

Die Aufgabe wird gelöst durch die unabhängigen Ansprüche. Somit wird die Aufgabe gelöst durch ein Steuergerät das zumindest eine erste Schnittstelle und zumindest eine zweite Schnittstelle umfasst. Die erste Schnittstelle ist mit einem elektrischen Antriebssystem einer Plattform verbindbar. Das Antriebssystem dient bevorzugt einer Bewegung der Plattform und/oder einer Ausrichtung der Plattform relativ zu einem Untergrund der Plattform. Dabei ist erfindungsgemäß vorgesehen, dass die erste Schnittstelle eingerichtet ist, das elektrische Antriebssystem mit einer Energieversorgung zu verbinden und/oder das elektrische Antriebssystem von der Energieversorgung zu trennen. Bevorzugt ist die erste Schnittstelle eingerichtet, das Antriebssystem gerichtet mit der Energieversorgung zu verbinden, so dass eine Antriebsrichtung einstellbar ist. Besonders bevorzugt ist die Antriebsvorrichtung ein Rotationsmotor, so dass dessen Drehrichtung durch gerichtetes Verbinden mit der Energieversorgung einstellbar ist. Weiterhin ist vorgesehen, dass die erste Schnittstelle eingerichtet ist, eine Leistungsaufnahme des Antriebssystems zu erfassen. Die zweite Schnittstelle ist mit der ersten Schnittstelle zum Datenaustausch verbunden. Außerdem ist die zweite Schnittstelle mit einem Benutzer-Endgerät verbindbar, wobei die erfasste Leistungsaufnahme über die zweite Schnittstelle an das Benutzer-Endgerät übertragbar ist und Steuersignale zum Ansteuern des Antriebssystems von dem Benutzer-Endgerät an die zweite Schnittstelle übertragbar sind. Die Verbindung zwischen der zweiten Schnittstelle und dem Benutzer-Endgerät ist bevorzugt eine drahtlose Verbindung. Durch die zweite Schnittstelle wird ermöglicht, dass eine Rückkopplung über das Benutzer-Endgerät erzeugt wird. Über das Benutzer-Endgerät ist somit das Antriebssystem in Abhängigkeit von der erfassten Leistungsaufnahme ansteuerbar. Eine Rückkopplung oder ein geschlossener Regelkreis liegt in dem Steuergerät selbst bevorzugt nicht vor. Somit ist ein sehr einfacher Aufbau des Steuergeräts sichergestellt, da dessen einzige Aufgabe das Empfangen oder Erfassen und Weiterleiten von Signalen ist.

Weiterhin wird die Aufgabe gelöst durch ein Benutzer-Endgerät zur Verbindung mit dem zuvor beschriebenen Steuergerät. Das Benutzer-Endgerät ist eingerichtet, von dem Steuergerät Signale über die aufgenommene Leistung des Antriebssystems zu erhalten. Außerdem ist das Benutzer-Endgerät eingerichtet, basierend auf den empfangen Signalen über die aufgenommene Leistung Steuersignale für das Antriebssystem zu berechnen. Die Steuersignale sind schließlich an die zweite Schnittstelle des Steuergeräts ausgebbar. Somit wird erreicht, dass nahezu sämtliche erforderliche Rechenleistung durch das Benutzer-Endgerät bereitgestellt wird. Das Benutzer-Endgerät bildet daher eine Rückkopplung, so dass das Antriebssystem sehr sicher und zuverlässig betreibbar ist.

Schließlich wird die Aufgabe gelöst durch ein Verfahren zum Ansteuern zumindest eines Antriebssystems einer Plattform. Das Verfahren umfasst die folgenden Schritte: Zunächst wird ein Benutzer-Endgerät mit einer Steuervorrichtung verbunden, die wiederum mit einem Antriebssystem verbunden ist. Das Steuergerät ist eingerichtet, das Antriebssystem mit einer Energieversorgung zu verbinden und die Energieversorgung von dem Antriebssystem zu trennen. Die Verbindung des Benutzer-Endgeräts mit dem Steuergerät ist insbesondere deshalb notwendig, da lediglich das Benutzer-Endgerät die relevanten Steuersignale erzeugt. Anschließend wird ein Steuersignal für die Antriebsvorrichtung von dem Benutzer-Endgerät generiert und an das Steuergerät ausgegeben. Dies geschieht vorteilhafterweise aufgrund eines Befehls durch eine Eingabe eines Benutzers oder ist das Ergebnis einer übergeordneten Regelung. Schließlich wird eine Leistungsaufnahme des Antriebssystems, die durch das Steuergerät erfasst wurde, von dem Benutzer-Endgerät empfangen. Dadurch stehen dem Benutzer-Endgerät jederzeit aktuelle Werte über die Leistungsaufnahme des angesteuerten Antriebssystems zur Verfügung. Daher erfolgt durch das Benutzer-Endgerät eine Überprüfung der Leistungsaufnahme, wobei das Benutzer-Endgerät des Antriebssystems deaktiviert, wenn ein aktueller Wert der aufgenommenen Leistung einen vordefinierten Wert überschreitet. Das Deaktivieren erfolgt durch die Übertragung eines Steuersignals an das Steuergerät, mit dem die Energieversorgung von dem Antriebssystem getrennt wird. Auf diese Weise wird einerseits eine Überlastung des Antriebssystems verhindert, andererseits wird bei entsprechender Wahl des vordefinierten Werts bevorzugt sichergestellt, dass ausreichend Reserven vorhanden sind, um eine zum Überwinden einer Haftreibung nötige Leistungsspitze bereitzustellen. Insbesondere bei Verwendung des Antriebssystems zum Bewegen einer Stütze der Plattform ist somit keine aufwändige Gestaltung der Stütze notwendig, um ein Verklemmen der Stütze in einer Endlage zu vermeiden.

Die Unteransprüche haben bevorzugte Weiterbildungen der Erfindung zum Inhalt.

Bevorzugt ist eine Verbindung zwischen Benutzer-Endgerät und zweiter Schnittstelle eine drahtlose Verbindung. Auf diese Weise ist ein Verbinden von Benutzer-Endgerät und Schnittstelle sehr einfach und flexibel möglich.

Weiterhin weist das Steuergerät zumindest einen ersten Lagesensor auf, wobei Signale des ersten Lagesensors über die zweite Schnittstelle an das Benutzer-Endgerät übertragbar sind. Somit stehen dem Benutzer-Endgerät vorteilhafterweise Daten über eine aktuelle Lage der Plattform zur Verfügung. Der erste Lagesensor ist bevorzugt durch zumindest einen Beschleunigungssensor realisiert. Unter Lage ist hier insbesondere der Grad eines Verkippens einer Bodenebene der Plattform aus einer horizontalen Ebene zu verstehen.

Alternativ oder zusätzlich ist bevorzugt vorgesehen, dass das Benutzer-Endgerät einen zweiten Lagesensor aufweist. Der zweite Lagesensor stellt dem Benutzer-Endgerät Daten über eine aktuelle Lage des Benutzer-Endgeräts zur Verfügung.

Somit sind bevorzugt zumindest drei Möglichkeiten vorhanden, eine aktuelle Lage der Plattform innerhalb des Benutzer-Endgeräts bereitzustellen: In einer ersten Möglichkeit wird vorteilhafterweise der zweite Lagesensor des Benutzer-Endgerätes genutzt um die Lage der Plattform zu ermitteln. Dazu wird das Benutzer-Endgerät, insbesondere flach, auf einen Tisch oder einen Boden der Plattform gelegt. Zusätzliche Sensoren in dem Steuergerät sind vorteilhafterweise nicht notwendig.

In einer zweiten Möglichkeit weist das Steuergerät einen ersten Lagesensor auf. Dazu wird zumindest ein, bevorzugt vorkalibrierter, Sensor in dem Steuergerät verbaut oder das Steuergerät wird vor einer erstmaligen Inbetriebnahme kalibriert. Dies macht es möglich auch ein Benutzer-Endgerät ohne integrierten zweiten Lagesensor zu verwenden oder das Benutzer-Endgerät von außerhalb der Plattform zur Ansteuerung des Antriebssystems zu verwenden. Das Steuergerät ist bevorzugt lagegenau in der Plattform eingebaut und vorab, idealerweise bereits im Werk, kalibriert.

Als dritte Möglichkeit ist vorteilhafterweise vorgesehen, dass der zweite Lagesensor des Benutzer-Endgeräts den in der Steuerung vorhandenen ersten Lagesensor kalibriert. Diese Möglichkeit verbindet die Vorteile der beiden vorhergehenden Varianten: Grundsätzlich wird der in der Steuerung verbaute erste Lagesensor verwendet. Dieser wird mithilfe des zweiten Lagesensors des Benutzer-Endgeräts kalibriert. Die Kalibrierung wird bevorzugt im Steuergerät abgespeichert. Dies ermöglicht eine weitere Verwendung mit einem Benutzer-Endgerät ohne zweiten Lagesensoren, wobei das Steuergerät vorteilhafterweise lediglich fest, aber nicht lagegenau montiert werden muss. Sollte ein Benutzer-Endgerät mit zweitem Lagesensor zur Verfügung stehen, so ist die Kalibrierung vorteilhafterweise wiederholbar.

Das Steuergerät ist außerdem vorteilhafterweise eingerichtet, die Antriebsvorrichtung zu deaktivieren, wenn das Benutzer-Endgerät nicht verbunden ist. Das Deaktivieren erfolgt durch eine Trennung des Antriebssystems von der Energieversorgung. Insbesondere ist dabzu vorgesehen, dass das Antriebssystem in einen sicheren Zustand überführt wird. Da erfindungsgemäß vorgesehen ist, dass das Steuergerät selbst lediglich als globale Schnittstelle zwischen Antriebssystem und Benutzer-Endgerät dient, muss stets sichergestellt sein, dass ein Benutzer-Endgerät verbunden ist. Sollte dies nicht der Fall sein, so besteht die Gefahr, dass das Antriebssystem unkontrolliert wird, was zu einer Beschädigung der Plattform und/oder einer angetriebenen Stütze und/oder des Antriebssystems selbst führen kann. Somit ist durch die vorteilhafte Weiterbildung ein sicherer Betrieb möglich, da im Falle eines Verbindungsabbruchs zwischen Steuergerät und Benutzer-Endgerät ein Stoppen der Antriebsvorrichtung erfolgt.

Weiterhin betrifft die Erfindung eine Plattform, insbesondere ein Fahrzeug oder einen Wohnwagen, die zumindest vier ausfahrbare Stützen umfasst. Das zuvor beschriebene Steuergerät ist bevorzugt mit Antriebssystemen der Stützen verbunden. Durch ein Antriebssystem ist bevorzugt eine Stütze bewegbar, insbesondere einfahrbar und/oder ausfahrbar. Die vier Stützen sind insbesondere in Eckbereichen des Fahrzeugs angebracht, so dass durch die Stützen das erfindungsgemäße Fahrzeug sehr einfach und flexibel ausgerichtet werden kann. Die Plattform ist alternativ bevorzugt ein mobiler Messestand, ein Anhänger, ein Vermessungsfahrzeug ein Sendefahrzeug, ein Einsatzfahrzeug mit einem Kranaufbau, ein mobiles Bühnenelement, ein Eventfahrzeug oder ein Bühnenfahrzeug.

Die Stützen sind bevorzugt Ausdrehstützen, die einen Gewindetrieb aufweisen. Alternativ sind die Stützen durch Elektrozylinder ausfahrbar oder weisen ein Hydrauliksystem auf, mit dem die Stützen bewegbar sind. Alle diese Stützen haben gemeinsam, dass ein Antriebssystem vorhanden ist, das mit dem erfindungsgemäßen Steuergerät, Benutzer-Endgerät und/oder mit den erfindungsgemäßen Verfahren steuerbar und regelbar ist.

Das erfindungsgemäße Benutzer-Endgerät ist bevorzugt eingerichtet, das Antriebssystem bei Überschreiten eines vordefinierten Werts der Leistungsaufnahme zu deaktivieren. Auf diese Weise wird bevorzugt verhindert, dass eine Überbelastung des Antriebssystems stattfindet, so dass das Antriebssystem vor Beschädigungen geschützt ist.

Bevorzugt ist das Benutzer-Endgerät ein Smartphone. Smartphones verfügen über eine ausreichende Rechenleistung, um die erfindungsgemäßen Aufgaben als Benutzer-Endgerät zu erfüllen. Außerdem sind Smartphones leicht mit anderen Geräten, wie insbesondere dem Steuergerät, verbindbar, wozu vorteilhafterweise der bluetooth-Standard verwendbar ist.

Das erfindungsgemäße Verfahren enthält bevorzugt die folgenden zusätzlichen Schritte: Zunächst wird durch das Benutzer-Endgerät eine Ziellage der Plattform relativ zu einem Untergrund des Fahrzeugs bestimmt. Dies geschieht vorteilhafterweise durch eine Eingabe eines Benutzers in das Benutzer-Endgerät. Anschließend erfolgt bevorzugt eine Regelung, mit der eine aktuelle Lage der in die Ziellage überführt wird. Dazu werden die folgenden Schritte wiederholt ausgeführt. Zunächst werden Signale eines Lagesensors durch das Benutzer-Endgerät erfasst, wobei der Lagersensor bevorzugt der erste Lagersensor und/oder der zweite Lagersensor ist. Somit stehen dem Benutzer-Endgerät Informationen über die aktuelle Lage des Fahrzeugs zur Verfügung. Insbesondere durch einen Vergleich der aktuellen Lage mit der Ziellage werden anschließend durch das Benutzer-Endgerät Steuersignale für das Antriebssystem berechnet, durch die eine Stütze der Plattform bewegbar sind. Insbesondere ist die Stütze durch die Steuersignale derart bewegbar, dass die Ziellage des Fahrzeugs erreicht wird. Bevorzugt ist außerdem vorgesehen, dass mehrere Stützen mit je einem eigenen Antriebssystem vorhanden sind, so dass durch das Benutzer-Endgerät Steuersignale für jedes Antriebssystem jeder Stütze berechnet werden. Somit wird sämtliche für die Ansteuerung des Antriebssystems benötigte Rechenleistung durch das Benutzer-Endgerät bereitgestellt. Die berechneten Steuersignale werden anschließend an das Steuergerät ausgegeben. Somit dient das Steuergerät lediglich dem aktivieren und/oder deaktivieren des Antriebssystems durch Verbinden und/oder Trennen der Energieversorgung gemäß den von dem Benutzer-Endgerät bereitgestellten Steuersignalen. Daher kann eine Rechenkapazität des Steuergeräts sehr gering gewählt werden. Außerdem ermöglicht das Verfahren, die Plattform beliebig nach den Wünschen eines Benutzers auszurichten. Insbesondere dann, wenn die Plattform ein Wohnwagen oder ein Wohnmobil ist, erlaubt das Verfahren eine horizontale Ausrichtung des Wohnwagens oder des Wohnmobils, was den Wohnkomfort erhöht.

Alternativ oder zusätzlich ist bevorzugt vorgesehen, dass das erfindungsgemäße Verfahren die folgenden zusätzlichen Schritte umfasst: Zunächst wird ein Steuersignal zum Einfahren einer durch das Antriebssystem antreibbaren Stütze von dem Benutzer-Endgerät berechnet und an das Steuergerät übertragen. Dies erfolgt insbesondere durch eine Eingabe eines Benutzers des Benutzer-Endgeräts. Anschließend wird vorteilhafterweise ein Verlauf der erfassten Leistungsaufnahme des Antriebssystems über eine Betriebszeit des Antriebssystems durch das Benutzer-Endgerät gespeichert. Somit stehen dem Benutzer-Endgerät bevorzugt zeitliche Informationen über die Leistungsaufnahme des Antriebssystems zur Verfügung. Daher ist bevorzugt vorgesehen, dass das Antriebssystem durch ein Trennen von der Energieversorgung deaktiviert wird, wenn die Leistungsaufnahme ansteigt und über dem vordefinierten Wert liegt. Ein Ansteigen der Leistungsaufnahme bedeutet insbesondere, dass sich die Stütze einer eingefahrenen Endlage nähert. Durch das Deaktivieren des Antriebssystems bei dem vordefinierten Wert wird sichergestellt, dass vorhandene Leistungsreserven zum erneuten Ausfahren der Stütze ausreichen. Dazu ist besonders bevorzugt der vordefinierte Wert derart gewählt, dass eine Differenz zwischen vordefiniertem Wert und einer maximalen Leistungsaufnahme des Antriebssystems verbleibt. Insbesondere verbleibt eine Differenz, die größer ist als eine Leistungsspitze, die zu Beginn einer Bewegung des Antriebssystems zur Überwindung einer Haftreibung auftritt.

Besonders bevorzugt bleibt bei einem Vergleich der Leistungsaufnahme des Antriebssystems mit dem vordefinierten Wert eine Leistungsspitze, die an einem Beginn einer Bewegung des Antriebssystems auftritt, unberücksichtigt. Da bei dem Beginn einer Bewegung zunächst eine Haftreibung von Antriebssystem und Stütze zu überwinden ist, wird zu Beginn eine erhöhte Leistung benötigt. Sobald die Haftreibung überwunden ist und der Antrieb und/oder die Stütze bewegt werden, so tritt lediglich Gleitreibung auf, die geringer als die Haftreibung ist. Somit hat eine zu Beginn einer Bewegung auftretende Leistungsspitze keinen Einfluss auf das zuvor beschriebene Verfahren.

Weiterhin betrifft die Erfindung ein Computerprogrammprodukt, umfassend Programmcode zur Durchführung des zuvor beschriebenen Verfahrens. Dazu läuft das Computerprogrammprodukt auf einer Rechenvorrichtung ab. Die Rechenvorrichtung ist bevorzugt ein Benutzer-Endgerät, besonders bevorzugt ein Smartphone.

Die Erfindung wird nun anhand von Ausführungsbeispielen unter Berücksichtigung der beigefügten Zeichnungen weiter erläutert. Dabei zeigen:
- Figur 1: eine schematische Ansicht eines Benutzer-Endgeräts sowie eines Fahrzeugs umfassend ein Steuergerät gemäß einem Ausführungsbeispiel der Erfindung,
- Figur 2: eine schematische Ansicht des Steuergeräts gemäß dem Ausführungsbeispiel der Erfindung,
- Figur 3: eine schematische Ansicht des Benutzer-Endgeräts gemäß dem Ausführungsbeispiel der Erfindung,
- Figur 4: ein schematischer Ablauf eines Einfahrvorgangs und eines Ausfahrvorgangs einer Stütze bei Verwendung des Benutzer-Endgeräts sowie des Steuergeräts dem Ausführungsbeispiel der Erfindung,
- Figur 5: ein schematischer Ablauf eines Einfahrvorgangs und eines fehlerhaften Einfahrvorgangs einer Stütze gemäß dem Stand der Technik,
- Figur 6: ein schematischer Ablauf eines Einfahrvorgangs, eines fehlerhaften Einfahrvorgangs und eines Ausfahrvorgangs einer Stütze bei Verwendung des Benutzer-Endgeräts sowie des Steuergeräts dem Ausführungsbeispiel der Erfindung,

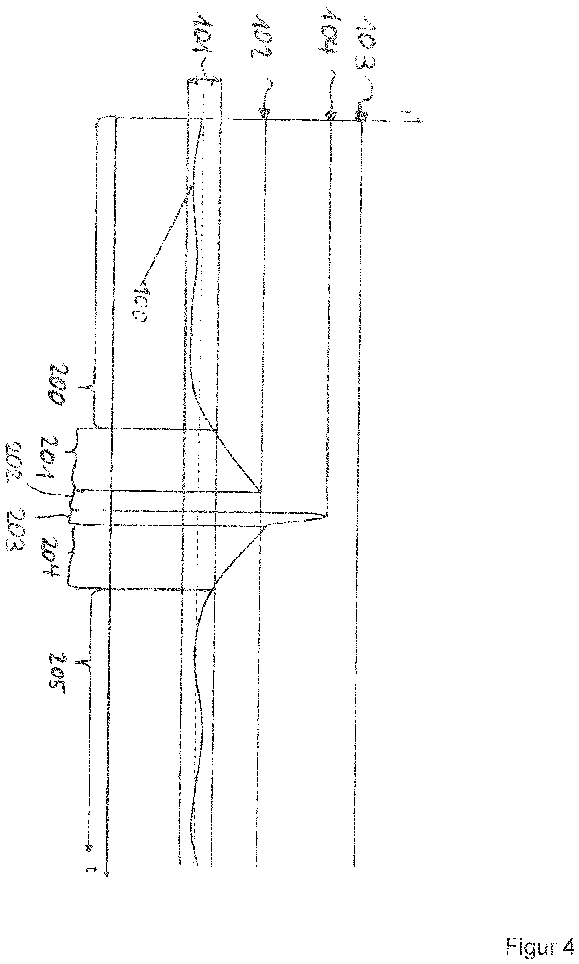

In den Ausführungsbeispielen wird stets Bezug auf einen Anwendungsfall der Erfindung genommen, die Nivellierung. Die Erfindung kann jedoch auf jede Art von Antrieben angewandt werden. Insbesondere ist erkennbar, dass die Endlagenregelung, die in den Figuren 4 bis 6 erklärt ist, nicht auf den skizzierten Anwendungsfall der Nivellierung beschränkt ist. Insbesondere wird hierzu auch die erfindungsgemäße Verbindung von Benutzer-Endgerät und Steuergerät nicht benötigt.

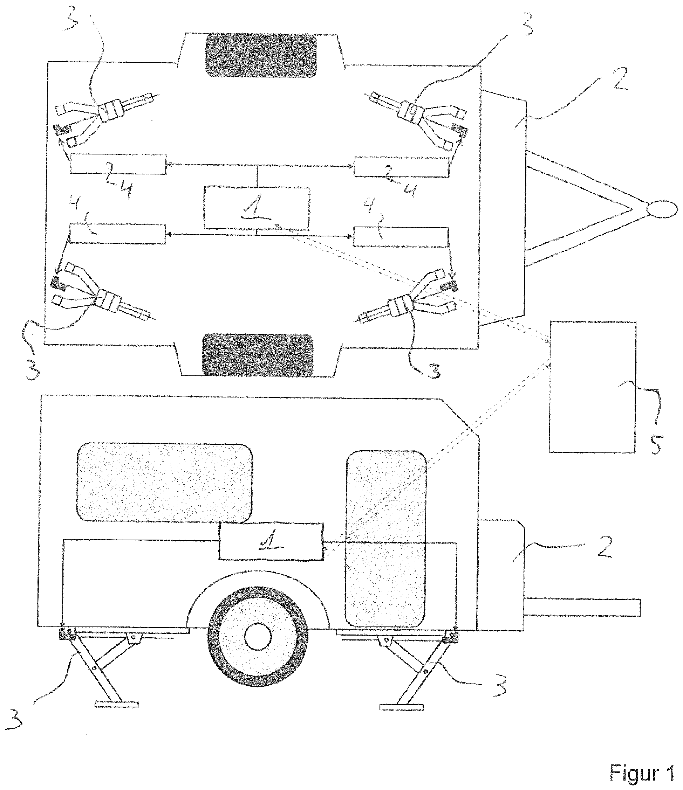

Figur 1 zeigt ein Steuergerät 1 gemäß einem Ausführungsbeispiel der Erfindung, das in einem Fahrzeug angeordnet ist, wobei das Fahrzeug die Plattform 2 bildet. Die Plattform 2 ist in dem in Figur 1 gezeigten Beispiel als Wohnwagen ausgeführt. Die Plattform 2 weist vier Stützen 3 auf, die in jeweils einer Ecke der Plattform 2 angeordnet sind. Jede Stütze 3 wird von einem Antriebssystem 4 angetrieben, wobei die Antriebssysteme 4 mit dem Steuergerät 1 verbunden sind, so dass elektrische Leistung von dem Steuergerät 1 an die Antriebssysteme 4 übertragbar ist.

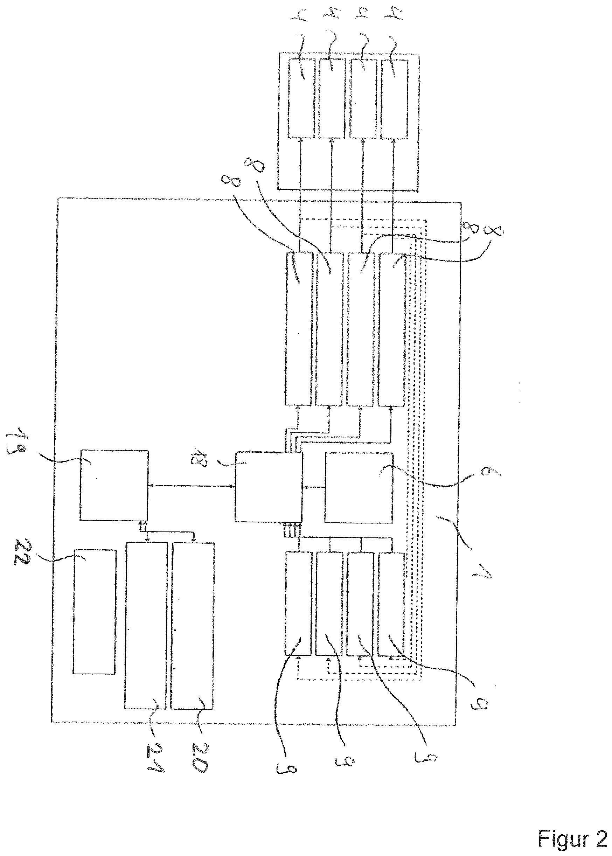

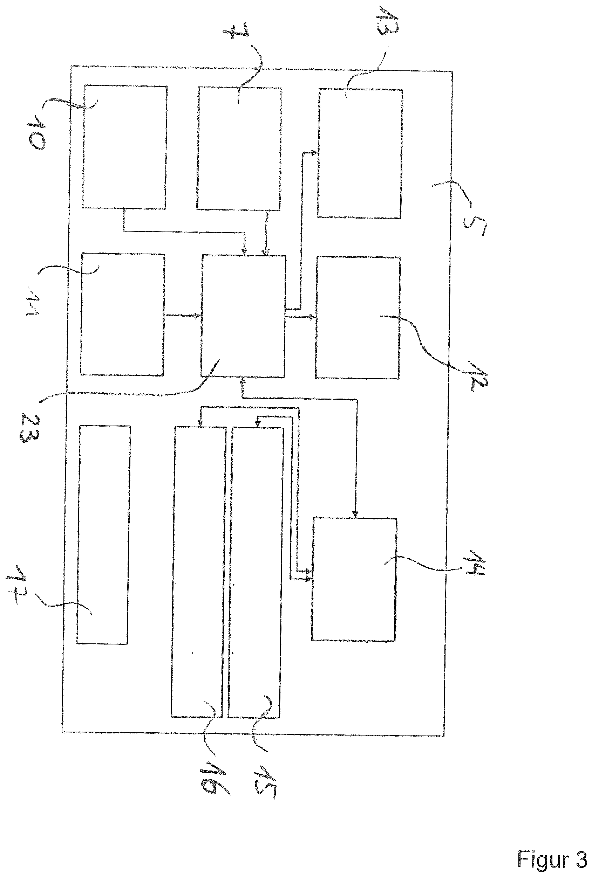

Weiterhin ist ein Benutzer-Endgerät 5, das insbesondere eine Smartphone ist, mit dem Steuergerät 1 verbindbar. Die Verbindung zwischen Benutzer-Endgerät 5 und Steuergerät 1 ist bevorzugt eine drahtlose Verbindung, insbesondere eine Drahtlosverbindung nach dem bluetooth-Standard. Somit steht einem Benutzer die Möglichkeit zur Verfügung, ein Ausfahren und/oder Einfahren der Stützen 3 über das Benutzer-Endgerät 5 zur steuern. Insbesondere ist vorgesehen, dass eine vollautomatische Nivellierung stattfindet, wobei die Plattform 2 durch Ausfahren der einzelnen Stützen 3 derart ausgerichtet wird, dass ein Boden der Plattform 2 eine horizontale Lage einnimmt. Für eine derartige Nivellierung wird ein erster Lagesensor 6 (vgl. Figur 2) des Steuergeräts 1 und/oder ein zweiter Lagesensor 7 (vgl. Figur 3) des Benutzer-Endgeräts 5 verwendet.

Figur 2 zeigt eine schematische Abbildung des Steuergeräts 1. Das Steuergerät 1 umfasst einen Micro-Kontroller 18 als eine zentrale Einheit. Mit dem Micro-Controller 18 sind vier Transistorschaltungen verbunden, die jeweils eine H-Brücke 8 bilden. Die H-Brücken 8 sind mit den Antriebssystemen 4 der Stützen 3 verbindbar, so dass die Antriebssysteme 4 durch geeignetes Ansteuern der mit einer Energieversorgung verbundenen H-Brücken 8 mit Strom versorgbar sind. Um eine Leistungsaufnahme der Antriebssysteme 4 zu bestimmen, sind Stromsensoren 9 sowohl mit den H-Brücken 8 als auch mit dem Micro-Controller 18 verbunden. Da die Antriebssysteme 4 mit einer konstanten oder annähernd konstanten elektrischen Spannung betrieben werden, ist somit mit den Stromsensoren 9 direkt ein Maß für die Leistungsaufnahme der Antriebssysteme erfassbar. Die H-Brücken 8 und die Stromsensoren 9 bilden somit eine erste Schnittstelle im Sinne der Erfindung.

Weiterhin ist der erste Lagesensor 6 mit dem Micro-Controller 18 verbunden, um Daten über eine aktuelle Lage der Plattform 2 zu übertragen. Schließlich ist ein Bluetooth-Chip 19 des Steuergeräts 1 mit dem Micro-Controller 18 verbunden, wobei insbesondere vorgesehen ist, dass das Benutzer-Endgerät 5 über den Bluetooth-Chip 19 des Steuergeräts 1 mit dem Steuergerät 1 verbindbar ist. Der Bluetooth-Chip 19 des Steuergeräts 1 wiederum ist mit einem ersten Bluetooth-Kennnummernspeicher 20 und mit einem zweiten Bluetooth-Kennnummernspeicher 21 verbunden. Somit bilden der Bluetooth-Chip 19, der erste Bluetooth-Kennnummernspeicher 20 und der zweite Bluetooth-Kennnummernspeicher 21 des Steuergeräts 1 eine zweite Schnittstelle im Sinne der Erfindung.

Eine Stromversorgung 22 dient der Versorgung sämtlicher Komponenten des Steuergeräts 1 mit elektrischer Energie. Die Stromversorgung 22 ist insbesondere ein Spannungswandler, der eine üblicherweise in Fahrzeugen verwendete Spannung von 10V bis 14V auf 5V wandelt. Die Energieversorgung, die mit den H-Brücken verbunden ist, ist vorteilhafterweise von der Stromversorgung 22 getrennt ausgeführt.

Figur 3 zeigt eine schematische Abbildung des Benutzer-Endgeräts 5. Dieses umfasst einen zentralen Steuerchip 23, der mit einem Touchscreen 10, einer Tastatur 11, einem Display 12, einem Lautsprecher 13, dem zweiten Lagesensor 7 und einem Bluetooth-Chip 14 verbunden ist. Der Bluetooth-Chip 14 wiederum ist mit einem ersten Bluetooth-Kennnummernspeicher 15 und mit einem zweiten Bluetooth-Kennnummernspeicher 16 verbunden. Durch den Bluetooth-Chip 14 ist das Benutzer-Endgerät 5 insbesondere mit dem Steuergerät 1 verbindbar. Eine Stromversorgung 17 ist in dem Benutzer-Endgerät vorhanden, um die beschriebenen Komponenten mit elektrischer Energie zu versorgen. Die Stromversorgung 17 ist insbesondere ein Akku.

Die Stützen 3 bauen bevorzugt auf einem Antrieb mit selbsthemmenden Bewegungsgewinde auf, was vielerlei Vorteile wie Sicherheit und geringe Komplexität mit sich bringt. Doch bekannte vollautomatische Systeme sind dadurch sehr teuer, da diese bis heute Endlagensensoren oder Schalter voraussetzen. Ansonsten ist es bekannten Systemen nicht möglich, eine Endlage der Stützen 3 zu erkennen.

Erfindungsgemäß wird durch eine Endlagenregelung das Verspannungsproblem in den Endlagen der Stützen 3 gelöst. Das Problem tritt bei allen selbsthemmenden Bewegungsgewinden auf: Fährt man mit einer Ausdrehstütze in eine Endlage, verspannt sich die Konstruktion, in Folge dessen erhöht sich die Zug-/Druckkraft am Bewegungsgewinde, das benötigte Antriebsmoment steigt und damit auch der benötigte Strom für den Antrieb. Um eine bestimmte Vorspannung in der Endlage zu erreichen, wird daher das Antriebssystem 4 bei Erreichen eines bestimmten Stromes abgeschaltet. Da eine dem Antriebssystem zugeführte Spannung konstant ist, wird über dem Strom eine Leistungsaufnahme des Antriebssystems 4 repräsentiert.

Will man die Stütze 3 nun aus der Endlage heraus bewegen, muss man mit einem noch höheren benötigten Antriebsmoment rechnen, da man vorerst die Haftreibung und nicht mehr die Gleitreibung, unter der gleichen Vorspannung, überwinden muss. Der gleiche Effekt tritt auf, wenn man eine Schraube lösen will. Das Anzugsmoment ist immer kleiner als das Losdrehmoment, auch "Slip-Stick-Effekt" genannt.

Bei ordentlicher Bedienung der Stütze 3 ist das nur ein kleines Problem. Voraussetzung, um die verspannte Stütze 3 wieder zu lösen, ist das rechtzeitige Ausschalten des Antriebssystems 4 beim Einfahren in die Endlage, denn dann lässt sich das Bewegungsgewinde auch aus dem Stillstand heraus mit dem zur Verfügung stehenden Strom wieder lösen. Es muss also gewährleistet sein, dass der Abschaltstrom beim Erreichen einer Endlage wesentlich geringer ist als der benötigte Anfahrtsstrom beim Loslösen aus dem Stillstand.

Ein Problem tritt dann auf, wenn der Benutzer der Anlage fälschlicherweise auf einen Befehl zum Einfahren der Stützen 3 gibt, obwohl sich die Stützen 3 schon in eingefahrener Position befinden. Denn nun würde eine Regelung gemäß dem Stand der Technik mit dem erlaubten Anfahrtsstrom die Stütze 3 unlösbar verspannen. Das Problem ist im Stand der Technik mittels zusätzlicher Sensoren und Taster gelöst.

Vorteilhafter ist es, mit einer intelligenten Regelung zu gewährleisten, dass die Regelung, durch kleine gezielte Bewegungen der Stütze 3 erkennt, in welcher Endlage sich die Stütze 3 befindet. Dafür ist es notwendig die Stütze 3 zu lösen, also die vordefinierte Anfahrtsstromstärke kurz zur Verfügung zu stellen. Doch bereits mit dem Lösen soll der Strom gemessen werden. In der darauffolgenden Bewegung unterscheiden sich nun die Ströme zwischen Ausfahren und Einfahren in einer Endlage, wie es in den Figuren 4 bis 6 erkennbar ist. In den in Figuren 4 bis 6 gezeigten Diagrammen bezeichnet die Abszisse die Zeit, während die Ordinate einen von dem Antriebssystem 4 aufgenommenen Strom zeigt.

Zunächst wird das in Figur 4 gezeigt Einfahren und Ausfahren der Stütze 3 beschrieben:
- Beim Bewegen der Stütze 3 in einem ersten Bereich 200 während eines unverspannten Zustands schwankt der von dem Antriebssystem 4 aufgenommeneStrom 100 in einem bestimmten Toleranzbereich 101.
- Dazu gibt das Benutzer-Endgerät 5 dem Steuergerät 1 den Befehl, die Stütze 3 weiter einzufahren.
- Dabei sendet das Steuergerät 1 ständig den gemessenen Strom 100 an das Benutzer-Endgerät 5.
- In einem zweiten Bereich 201 tritt eine leichte Vorspannung der Stütze 3 ein, da sich diese einer Endlage nähert.
- Sobald eine Stütze 3 beginnt sich zu verspannen, steigt der Strom an der jeweiligen H-Brücke 8.
- Steuergerät 1 registriert die Stromsteigerung durch den Stromsensor 9 und sendet dem Benutzer-Endgerät 5 die entsprechenden Stromsignale.
- Ist ein bestimmter Abschaltstrom 102 erreicht, errechnet das Benutzer-Endgerät, den Prozess zu stoppen und überträgt entsprechende Steuersignale an das Steuergerät 1. Der Abschaltstrom 102 ist bevorzugt deutlich geringer als ein Maximalstrom 103.
- Das Benutzer-Endgerät 5 teilt somit dem Steuergerät 1 mit, den Strom für das Antriebssystem 4 abzuschalten, wobei das Benutzer-Endgerät 5 den Prozess für jedes Antriebssystem 4 einzeln regelt.
- Die Ströme 100 werden von den Stromsensoren 9 einzeln gemessen, von dem Steuergerät 1 registriert und dem Benutzer-Endgerät 5 weitergeleitet, da die H-Brücken 8 getrennt voneinander geschaltet sind.
- Mit dem Abschalten fällt der Strom 100 jedes Antriebssystems 4 annähernd horizontal ab.
- Mit dem Abschließen des Einfahrprozesses folgt ein Pausenbereich 202, in dem das Benutzer-Endgerät 5 und das Steuergerät 1 gefahrlos getrennt werden können, wobei Benutzer-Endgerät 5 und Steuergerät 1 zum Ausfahren wieder verbunden sein müssen.
- Zum Ausfahren der Stützen 3 teilt der Benutzer dem Benutzer-Endgerät 5, die Stützen 3 auszufahren. Dies geschieht insbesondere durch Bildschirmeingabe am Touchscreen 10 oder durch Verwendung der Tastatur 11.
- Das Benutzer-Endgerät 5 teilt dem Steuergerät 1 mit, die H-Brücken 8 zu schalten, damit die Antriebssysteme 4 die Stützen 3 ausfahren. Dabei steigt der durch den Stromsensor 9 gemessene Strom 100 bis zu einem Loslösestrom 104 an und ist somit höher als der Abschaltstrom 102. Grund dafür ist die nun wirkende Haftreibung. Das Benutzer-Endgerät 5 muss dem Steuergerät 1 daher höhere Ströme erlauben.
- Nach einem ersten Spitzenbereich 203 ist die Haftreibung überwunden und der Strom 100 fällt zunächst stark ab. Die Stützen 3 sind damit losgelöst.
- Nach dem starken Fall des Stroms 100 entspannen sich die Stützen 3 über den Lösungsbereich 204. Dabei sinkt der Strom 100 weiter, jedoch weniger schnell als im ersten Spitzenbereich 203.
- Beim Bewegen der Stützen 3 in dem Ausfahrbereichs in unverspanntem Zustand schwankt der Strom in dem Toleranzbereich 101. Dazu gibt das Benutzer-Endgerät 5 dem Steuergerät 1 den Befehl, die Stützen 3 weiter einzufahren und das Steuergerät 1 sendet ständig die Stromstärkenmessungen an das Benutzer-Endgerät 5 weiter.

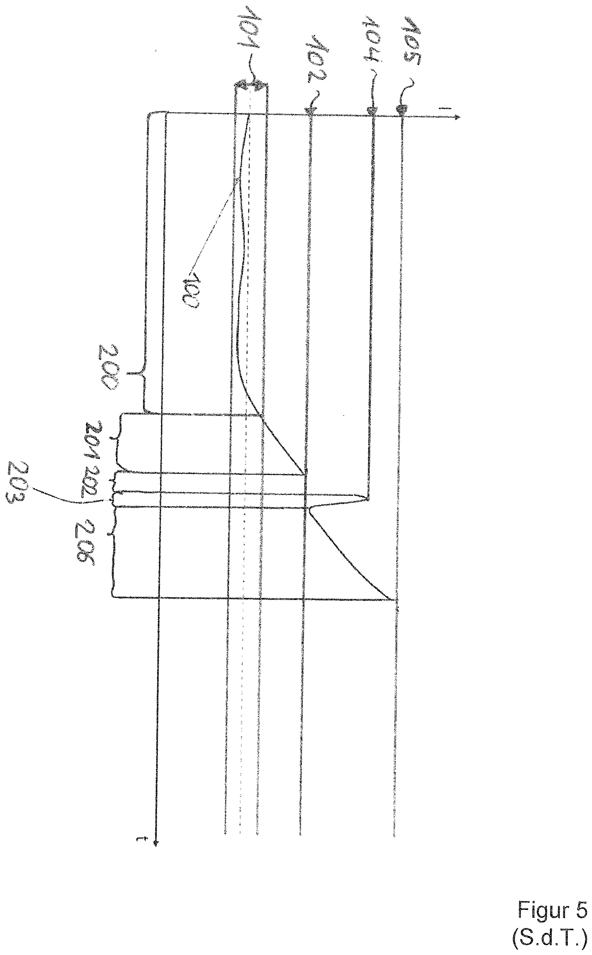

In Figur 5 ist ein Einfahren der Stütze 3 wie in Figur 4 gezeigt, wobei anschließend ein weiterer Einfahrvorgang gezeigt ist, der fehlerhafterweise initiiert wurde. Der in Figur 5 gezeigte Verlauf ist nicht Teil der Erfindung sondern bereits im Stand der Technik bekannt:
- Der erste Bereich 200, der zweite Bereich 201 und der erste Pausenbereich 202 sind identisch zu Figur 4.
- Der erste Unterschied zwischen dem normalen Einfahren und Ausfahren (Figur 4) und dem in Figur 5 gezeigten Verlauf zeichnet sich zwar anhand des Verlaufs des Stroms 100 erst nach dem ersten Spitzenbereich 203 ab, hat seine Ursache dennoch davor.
- Das Benutzer-Endgerät 5 und das Steuergerät müssen zum Ausfahren der Stütze nach dem Pausenbereich 202 wieder verbunden sein.
- Der Benutzer teilt dem Benutzer-Endgerät 5 zum Beispiel durch Bildschirmeingabe am Touchscreen 10 oder durch die Tastatur 11 fälschlicherweise mit, eine oder alle Stützen 3 erneut einzufahren. Grund dafür kann zum Beispiel sein, dass der Benutzer der Meinung ist, dass die Stützen 3 noch ausgefahren sind oder er sich vertippt.
- Zum Loslösen muss das Benutzer-Endgerät 5 dem Steuergerät 1 wieder höhere Ströme erlauben, so dass der Strom 100 im ersten Spitzenbereich bis zum Loslösestrom 104 ansteigt. Somit steigt der Strom 100 im ersten Spitzenbereich zunächst an und fällt danach sehr rasch ab.
- Nach dem Lösen beginnt eine erneute Verspannung innerhalb eines Verspannungsbereichs 206, da sich die Stützen 3 bereits in eingefahrenem und vorgespanntem Zustand befinden. Damit steigt auch der Strom 100 an bis der Maximalstrom 103 erreicht ist. Bei Erreichen des Maximalstroms 103 wird der Vorgang durch das Benutzer-Endgerät 5 abgebrochen, da sich die Stütze 3 nicht mehr weiter bewegen kann.
Ein weiteres elektrisches Lösen ist bereits vor Erreichen des Maximalstroms 103 nicht mehr möglich, wenn der Abschaltstrom 102 nicht mindestens so gering ist, dass sich der Unterschied zwischen der höheren geforderten Stromstärke beim Loslösen und der niedrigeren geforderten Stromstärke unter Gleitreibung, also Bewegung, nicht mehr überwinden lässt, ohne den Maximalstrom im Anlauf zu überschreiten. Somit können bei Geräten aus dem Stand der Technik Fälle auftreten, in denen die Stützen 3 so verspannt werden, dass sie durch die Antriebssysteme 4 nicht mehr lösbar sind.

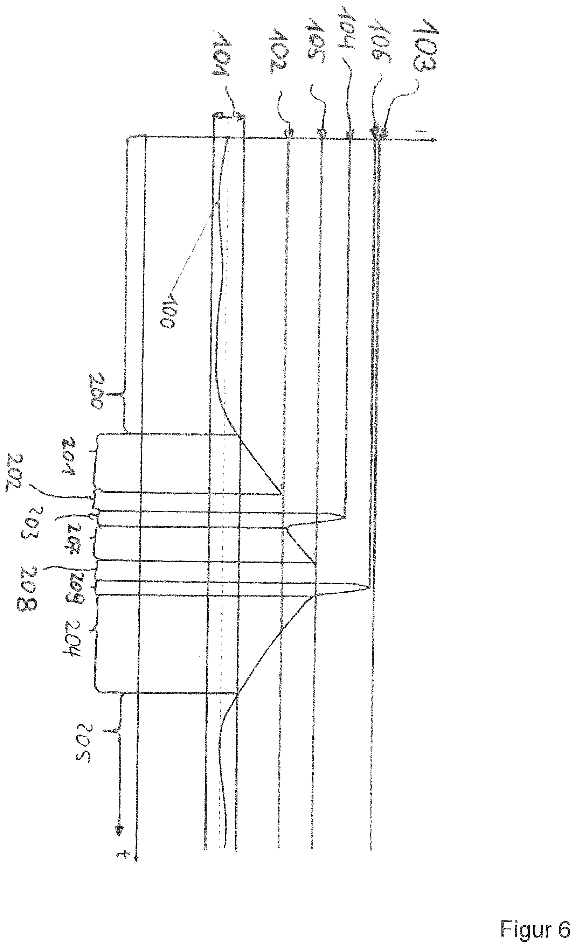

Um das Problem aus Figur 5 zu lösen, stellt das erfindungsgemäße Benutzer-Endgerät eine entsprechende Regelung zur Vermeidung solcher Situationen bereit. Dies ist in Figur 6 gezeigt:
- Der erste Bereich 200, der zweite Bereich 201 und der erste Pausenbereich 202 sind identisch zu Figur 4.
- Der erste Unterschied zwischen dem normalen Einfahren und Ausfahren (Figur 4) und dem in Figur 5 gezeigten Verlauf zeichnet sich zwar anhand des Verlaufs des Stroms 100 erst nach dem ersten Spitzenbereich 203 ab, hat seine Ursache dennoch davor.
- Das Benutzer-Endgerät 5 und das Steuergerät müssen zum Ausfahren der Stütze nach dem Pausenbereich 202 wieder verbunden sein.
- Der Benutzer teilt dem Benutzer-Endgerät 5 zum Beispiel durch Bildschirmeingabe am Touchscreen 10 oder durch die Tastatur 11 fälschlicherweise mit, eine oder alle Stützen 3 erneut einzufahren. Grund dafür kann zum Beispiel sein, dass der Benutzer der Meinung ist, dass die Stützen 3 noch ausgefahren sind oder er sich vertippt.
- Zum Loslösen muss das Benutzer-Endgerät 5 dem Steuergerät 1 wieder höhere Ströme erlauben, so dass der Strom 100 im ersten Spitzenbereich bis zum Loslösestrom 104 ansteigt. Somit steigt der Strom 100 im ersten Spitzenbereich zunächst an und fällt danach sehr rasch ab.
- Anders als bei dem in Figur 5 beschrieben Verfahren ohne erfindungsgemäße Endlagenregelung, sendet das Steuergerät 1 nicht nur ständig die Messwerte des Stroms 100 der Stromsensoren 9 an das Benutzer-Endgerät 5, sondern das Benutzer-Endgerät 5 speichert diese Werte auch und weist den Werten Zeitpunkte oder zumindest eine Reihenfolge zu, um später darauf zurückgreifen zu können.
- Nach dem ersten Spitzenbereich 203 beginnt eine erneute Verspannung in einem Fehlerbereich 207, da sich die Stützen 3 bereits in eingefahrenem und vorgespanntem Zustand befinden.
- Das Steuergerät 1 sendet die Signale der Stromsensoren 9 weiterhin an das Benutzer-Endgerät 5.
- Durch den Vergleich mit den zuvor gespeicherten Werte und der zugewiesenen Zeitpunkte oder Reihenfolge, mit dem Ergebnis, dass die Werte erneut steigen, erkennt das Benutzer-Endgerät 5, dass die Stütze 3 weiter verspannt wird. Das Benutzer-Endgerät erkennt daher den Fehlerbereich 207.
- Nach Erkennen des Fehlerbereichs 207, entscheidet das Benutzer-Endgerät 5, den Strom erneut automatisch abzuschalten und befiehlt damit dem Steuergerät 1 den Strom von der jeweiligen H-Brücke 8 und damit zu dem jeweiligen Antriebssystem 4 zu unterbrechen.
- Dadurch steigt der Strom 100 nur bis ein weiterer, vordefinierter Abschaltstrom 105 erreicht ist.
- Der weitere Abschaltstrom 105 kann entweder im Vorfeld bereits so definiert werden, dass sich mit der übrigen Stromstärke bis zum Maximalstrom 103 nochmals die Haftreibung aus dem Stillstand überwinden lässt, oder das Benutzer-Endgerät 5 definiert die jeweilige, momentan anfallende Stromstärke, bei Erkennen der Charakteristik einer erneuten Verspannung, als die jeweilige Abschaltströme 102 und befiehlt damit sofort nach Erkennen der erneuten Verspannung den Stopp der jeweiligen Stütze 3.
- Vorteilhafterweise ist eine Software des Benutzer-Endgeräts so programmiert, dass nach erkennen des Fehlerbereichs 207 bei nur einem der Antriebssysteme 4 alle Antriebssysteme 4 abgeschaltet werden, ehe die gleiche Situation bei den verbleibenden Antriebssystemen 4 eintritt, da anzunehmen ist, dass sich alle Stützen 3 in einer ähnlichen Position befinden.
- Nachdem die Ströme für die Antriebssysteme 4 abgeschaltet sind, wird der Benutzer durch das Benutzer-Endgerät 5 darauf hingewiesen. Dies kann beispielsweise durch eine Anzeige am Display 10 des Benutzer-Endgeräts 5 geschehen, wo darauf hingewiesen wird, dass das System annimmt, dass sich die Stützen 3 bereits im eingefahrenen Zustand befinden, oder auch durch ein akustisches Signal über den Lautsprecher 13 des Benutzer-Endgeräts 5.
- Es können nun dem Benutzer zweckdienliche Schritte vorgeschlagen werden. Etwa: "Störung aufgetreten. Die Stützen erneut ausfahren?"
- Auch kann der Benutzer auf mögliche andere Fehler hingewiesen werden, die diese Fehlermeldung verursachen könnten, denn eine starke, auf einen bestimmten Bereich beschränkte Verschmutzung einer Spindel oder eine Verpolung eines Antriebssystems 4 während des ersten Pausenbereichs 202 können ähnliche oder gleiche Anstiege im Stromlaufdiagramm verursachen und damit auch die gleiche Fehlermeldung hervorrufen.
- Durch das rasche erneute Abschalten nach dem Fehlerbereich 207 entsteht ein zweiter Pausenbereich. Nach dem erneuten Einschalten des Antriebssystems 4 kann die Stromreserve bis zum Erreichen des Maximalstroms 103 genutzt werden, um während eines zweiten Spitzenbereichs 209 ein erneutes Lösen zu gewährleisten.
- Das erneute Lösen während des zweiten Spitzenbereichs 209 geschieht ähnliche wie das erste Lösen während des ersten Spitzenbereichs 203, jedoch lässt das Benutzer-Endgerät 2 nun erhöhte Ströme zum Loslösen zu, so dass der Strom 100 bis zu einem weiteren Loslösestrom 106 ansteigt.
- Anschließend folgt die Entspannung der Stützen 3 während des Lösungsbereichs 204. Dieser ist aufgrund der zuvor stattgefundenen erneuten Verspannung länger als in Figur 4.
- Der Ausfahrbereich 205 ist identisch zu Figur 4.

Das Steuergerät 1 ist so programmiert, dass alle Ströme zu den Antriebsvorrichtungen 4 abgeschaltet werden, sollte die Verbindung, insbesondere die Funkverbindung, zum Benutzer-Endgerät 5 unterbrochen werden. Gleichzeitig wird der Benutzer über das Display 12 und/oder über ein akustisches Signal aus dem Lautsprecher 13 des Benutzer-Endgeräts 5 auf den Abbruch der Verbindung hingewiesen.

Auch wenn sich eine oder mehrere Stützen 3 bereits in einer Endlage befinden, wird hier die erfindungsgemäße Endlagenregelung Schäden durch Bedienungsfehler wie z.B. erneutes Einfahren vermeiden.

Weiterhin wird dem Benutzer möglich sein ein Passwort festzulegen, das immer vor dem Aufrufen der Applikation abgefragt wird. Der Benutzer kann auch eine bestimmte Zeitdauer festlegen, nach der der Passwortschutz wieder aktiviert wird. Dies beugt ungewünschtem Bedienen durch dritte Personen wie beispielsweise Kindern am eigenen Gerät vor und verhindert auch ungewolltes Bedienen durch unabsichtliche Berührung des Touchscreens 10 oder der Tastatur 11.

Jedem Steuergerät ist am Bluetooth-Chip 14 ein Sicherheitscode zugewiesen. Dieser Code wird zum sogenannten "Pairing", dem Verbinden zweier Geräte via Bluetooth, benötigt. Der Bluetooth-Chip 14 fragt den Benutzer beim Pairing nach dem Code und nur nach richtiger Eingabe werden die beiden Geräte verbunden. Dies vermeidet unbefugtes bedienen, durch ein nicht autorisiertes Benutzer-Endgerät 5, das sich in Reichweite der Funkverbindung des Steuergeräts 1 befindet.

Der Benutzer hat die Möglichkeit durch Eingabe am Benutzer-Endgerät 5 einen bestimmten Winkel längs oder quer zu einer Radachse der Plattform 2 zu definieren, nach dem sich die Plattform 2 ausrichten soll. Der Benutzer kann auch manuell durch anhaltendes Drücken von Tasten am Touchscreen 10 oder einer Taste der Tastatur 11 die Neigung zu verstellen. Dies soll dem Benutzer den Komfort, insbesondere beim Schlafen, erhöhen.

Für einen Reifenwechsel wird die Plattform 2 auf einer oder auf beiden Seiten gleichzeitig angehoben, bis eines oder mehrere, insbesondere alle, Räder den Boden nicht mehr berühren. Dieser Vorgang kann viel Leistung an den Antriebssystemen 4 benötigen, da im Vergleich zur reinen Nivellierung die Stützwirkung der Reifenachse zum Teil oder völlig vernachlässigt wird und die Stützen 3 die volle Last tragen müssen. Daher ist das Steuergerät 1 auf diese hohe Belastung ausgelegt.

Ein derartiges Anheben der Plattform 2 kann möglicherweise ein Durchbiegen der Trägerkonstruktion verursachen. Aus diesem Grund wird der Benutzer bevorzugt auf das mögliche Problem hingewiesen. Hierzu wird der Benutzer am Display 12 und/oder durch ein akustisches Signal aus dem Lautsprecher 13 aufgefordert, den Vorgang von außerhalb der Plattform 2 zu überwachen. Darüber hinaus muss der Benutzer bestätigen, den Hinweis gelesen und verstanden zu haben.

Auch ist vorteilhafterweise vorgesehen, eine weiteres Passworts oder ein weiterer Sicherheitscode einzugeben. Sollte das Steuergerät 1 und/oder die Antriebssysteme 4 an die technischen Grenzen stoßen und die Stromsensoren 9 zu hohe Ströme registrieren, so wird der Vorgang abgeschaltet und der Benutzer wiederum auf die aktuelle Situation hingewiesen.

Sollte speziell beim Anheben durch alle Stützen 3, der benötigte Gesamtstrom zu hoch ansteigen, so wird der Benutzer vorteilhafterweise darauf hingewiesen, den Wohnwagen nur einseitig anzuheben um ein Reifenwechseln doch noch bewerkstelligen zu können.

Sollte, insbesondere nach einer Dachreinigung oder beim Abstellen der Plattform, Wasser am Dach zum Stehen kommen, so ist vorteilhafterweise vorgesehen, dass der Benutzer durch Auswählen einer Option an dem Benutzer-Endgerät 5 die Neigung in Längsrichtung der Plattform so einstellen kann, dass das Wasser problemlos abläuft.

Insbesondere bei der Anwendung der Erfindung für Gastronomiefahrzeuge, Verkaufsstandfahrzeuge und ähnlichem ist diese Funktion hilfreich. Darüber hinaus kann der Benutzer bevorzugt eine bestimmte Neigung vordefinieren und am Benutzer-Endgerät abspeichern.

Die zuvor beschriebenen Verfahrensschritte sind vorteilhafterweise in einem Computerprogrammprodukt implementiert, das auf dem Benutzer-Endgerät lauffähig ist.

Die Erfindung erlaubt es, dass ein bestehendes elektrisches aber nichtvollautomatisches System genutzt werden kann, da lediglich das Steuergerät 1 und das Computerprogrammprodukt erworben werden muss. Insbesondere ist hier vorgesehen, dass das Benutzer-Endgerät 5 das Smartphone des Benutzers ist. Damit spart der Benutzer Kosten schont durch Nutzung seines bestehenden Systems die Umwelt.

Anbieter von Stützen 3 können weiterhin ihre schon am Markt eingeführten und bewährten Stützen 3 unverändert verkaufen und dazu das beschriebene erfindungsgemäße System aus Steuergerät 1 und/oder Benutzer-Endgerät 5 und/oder Computerprogrammprodukt vergleichsweise preiswert anbieten. Das erfindungsgemäße System ist somit auch als Bausatz für vorhandene, ausfahrende Stützen zum Nachrüsten möglich.

### Bezugszeichenliste

- 1: Steuergerät
- 2: Plattform
- 3: Stütze
- 4: Antriebssystem
- 5: Benutzer-Endgerät
- 6: erster Lagesensor
- 7: zweiter Lagesensor
- 8: Transistoren / H-Brücke
- 9: Stromsensor
- 10: Touchscreen
- 11: Tastatur
- 12: Display
- 13: Lautsprecher
- 14: Bluetooth-Chip des Benutzer-Endgeräts
- 15: erster Bluetooth-Kennnummernspeicher des Benutzer-Endgeräts
- 16: zweiter Bluetooth-Kennnummernspeicher des Benutzer-Endgeräts
- 17: Stromversorgung des Benutzer-Endgeräts
- 18: Micro-Controller
- 19: Bluetooth-Chip des Steuergeräts
- 20: erster Bluetooth-Kennnummernspeicher des Steuergeräts
- 21: zweiter Bluetooth-Kennnummernspeicher des Steuergeräts
- 22: Stromversorgung des Steuergeräts
- 23: zentraler Steuerchip des Benutzer-Endgeräts

- 100: Strom
- 200: erster Bereich
- 201: zweiter Bereich
- 202: erster Pausenbereich
- 203: erster Spitzenbereich
- 204: Lösungsbereich
- 205: Ausfahrbereich
- 206: Verspannungsbereich
- 207: Fehlerbereich
- 208: zweiter Pausenbereich
- 209: zweiter Spitzenbereich
- 210: Lösungsbereich

## Patentansprüche

1. Steuergerät (1), umfassend
zumindest eine erste Schnittstelle (8, 9), die mit zumindest einem elektrischen Antriebssystem (4) einer Plattform (2) verbindbar ist, wobei die erste Schnittstelle eingerichtet ist, das elektrische Antriebssystem (4) mit einer Energieversorgung zu verbinden und/oder von einer Energieversorgung zu trennen sowie eine Leistungsaufnahme des Antriebssystems (4) zu erfassen, und
eine mit der ersten Schnittstelle (8, 9) zum Datenaustausch verbundene zweite Schnittstelle (19, 20, 21), die mit einem Benutzer-Endgerät (5) verbindbar ist, wobei die erfasste Leistungsaufnahme über die zweite Schnittstelle (19, 20, 21) an das Benutzer-Endgerät (5) übertragbar ist und Steuersignale zum Ansteuern des Antriebssystems (4) von dem Benutzer-Endgerät (5) an die zweite Schnittstelle (19, 20, 21) übertragbar sind.

2. Steuergerät (1) nach Anspruch 1, **dadurch gekennzeichnet, dass** eine Verbindung zwischen Benutzer-Endgerät (5) und zweiter Schnittstelle (19, 20, 21) eine drahtlose Verbindung ist.

3. Steuergerät (1) nach einem der vorhergehenden Ansprüche, **gekennzeichnet durch** zumindest einen ersten Lagesensor (6), der eine Lage der Plattform (2) erfasst, wobei Signale des ersten Lagesensors (6) über die zweite Schnittstelle (19, 20, 21) an das Benutzer-Endgerät (5) übertragbar sind.

4. Steuergerät (1) nach einem der vorhergehenden Ansprüche, **dadurch gekennzeichnet, dass** das Steuergerät (1) eingerichtet ist, die Antriebsvorrichtung (4) von der Energieversorgung zu trennen, wenn das Benutzer-Endgerät (5) mit der zweiten Schnittstelle (19, 20, 21) nicht verbunden ist.

5. Plattform (2), insbesondere Fahrzeug oder Wohnwagen, umfassend zumindest eine ausfahrbare Stütze (3) und zumindest ein Antriebssystem (4) sowie ein Steuergerät (1) nach einem der vorhergehenden Ansprüche, wobei durch ein Antriebssystem (4) jeweils eine Stütze (3) ausfahrbar und/oder einfahrbar ist.

6. Benutzer-Endgerät (5) zur Verbindung mit einem Steuergerät (1) nach einem der Ansprüche 1 bis 4, **dadurch gekennzeichnet, dass** das Benutzer-Endgerät (5) eingerichtet ist, von dem Steuergerät (1) Signale über die Leistungsaufnahme des Antriebssystems (4) zu erhalten und darauf basierend Steuersignale für das Antriebssystem (4) zu berechnen und an das Steuergerät (1) auszugeben.

7. Benutzer-Endgerät (5) nach Anspruch 6, **gekennzeichnet durch** zumindest einen zweiten Lagesensor (7).

8. Benutzer-Endgerät (5) nach einem der Ansprüche 6 oder 7, **dadurch gekennzeichnet, dass** das Benutzer-Endgerät (5) eingerichtet ist, das Antriebssystem (4) bei Überschreiten eines vordefinierten Werts der Leistungsaufnahme zu deaktivieren.

9. Benutzer-Endgerät (5) nach einem der Ansprüche 6 bis 8, **dadurch gekennzeichnet, dass** das Benutzer-Endgerät (5) ein Smartphone ist.

10. Verfahren zum Ansteuern zumindest eines Antriebssystems (4) einer Plattform (2), umfassend die Schritte:
- Verbinden eines Benutzer-Endgeräts (5) mit einem Steuergerät (1), das mit dem Antriebssystem Antriebssystems (4) verbunden ist, wobei durch das Steuergerät eine Energieversorgung mit dem Antriebssystem (4) verbindbar ist und/oder die Energieversorgung von dem Antriebssystem (4) trennbar ist,
- Ausgeben, insbesondere wiederholtes Ausgeben, zumindest eines Steuersignals für die Antriebsvorrichtung (4) von dem Benutzer-Endgerät (5) an das Steuergerät (1),
- Empfangen einer erfassten Leistungsaufnahme des Antriebssystems (4) durch das Benutzer-Endgerät (5), wobei die Leistungsaufnahme von dem Steuergerät (1) erfassbar und an das Benutzer-Endgerät übertragbar ist, und
- Überprüfung der Leistungsaufnahme durch das Benutzer-Endgerät (5) und Übertragung eines Steuersignals an das Steuergerät (1) zum Trennen der Energieversorgung von dem Antriebssystem (4), wenn ein aktueller Wert der aufgenommenen Leistung einen vordefinierten Wert überschreitet.

11. Verfahren nach Anspruch 10, **gekennzeichnet durch** die zusätzlichen Schritte:
- Bestimmen einer Ziellage der Plattform (2) relativ zu einem Untergrund der Plattform (2) durch das Benutzer-Endgerät (5), und wiederholtes Ausführen der folgenden Schritte, biss die Ziellage mit einer aktuellen Lage der Plattform übereinstimmt:
- Erfassen von Signalen eines Lagesensors (6, 7) und Berechnen der aktuellen Lage der Plattform (2) durch das Benutzer-Endgerät (5) aus den erfassten Signalen,
- Berechnen von Steuersignalen für das Antriebssystem (4) durch das Benutzer-Endgerät (5), durch die eine durch das Antriebssystem (4) antreibbare Stütze (3) bewegbar ist,
- Ausgeben der Steuersignale an das Steuergerät (1).

12. Verfahren nach einem der Ansprüche 10 oder 11, **gekennzeichnet durch** die zusätzlichen Schritte:
- Berechnen und Ausgeben zumindest eines Steuersignals zum Einfahren einer durch das Antriebssystem (4) antreibbaren Stütze (3) von dem Benutzer-Endgerät (5) an das Steuergerät (1),
- Aufnehmen eines Verlaufs der erfassten Leistungsaufnahme des Antriebssystems (4) über eine Betriebszeit des Antriebssystems (4) durch das Benutzer-Endgerät (5), und
- Senden eines Steuersignals an das Steuergerät (1) zum Trennen der Energieversorgung von dem Antriebssystem (4) durch das Benutzer-Endgerät (5) wenn die Leistungsaufnahme ansteigt und über dem vordefinierten Wert liegt.

13. Verfahren nach einem der Ansprüche 10 bis 12, **gekennzeichnet dadurch, dass** bei einem Vergleich der Leistungsaufnahme des Antriebssystems (4) mit dem vordefinierten Wert eine Leistungsspitze, die an einem Beginn einer Bewegung des Antriebssystems (4) auftritt, unberücksichtigt bleibt.

14. Computerprogrammprodukt, umfassend Programmcode zur Durchführung eines: Verfahrens nach einem der Ansprüche 10 bis 13, wenn das Computerprogrammprodukt auf einer Rechenvorrichtung abläuft.

## Claims

1. Control device (1), comprising
at least a first interface (8, 9) being connectable to at least one electrical drive system (4) of a platform (2), the first interface being configured to connect the electrical drive system (4) to a power supply and/or to disconnect from a power supply, and to detect a power consumption of the drive system (4), and
a second interface (19, 20, 21) connected to the first interface (8, 9) for data exchange, being connectable to a user terminal (5), wherein the detected power consumption is transmittable to the user terminal (5) via the second interface (19, 20, 21), and control signals for controlling the drive system (4) are transmittable from the user terminal (5) to the second interface (19, 20, 21).

2. Control device (1) according to claim 1, **characterized in that** a connection between the user terminal (5) and the second interface (19, 20, 21) is a wireless connection.

3. Control device (1) according to one of the preceding claims, **characterized by** at least one first position sensor (6) which detects a position of the platform (2), wherein signals from the first position sensor (6) are transmittable to the user terminal (5) via the second interface (19, 20, 21).

4. Control device (1) according to one of the preceding claims, **characterized in that** the control device (1) is configured to separate the drive system (4) from the power supply when the user terminal (5) is not connected with the second interface (19, 20, 21).

5. Platform (2), in particular a vehicle or caravan, comprising at least one extendable support (3) and at least one drive system (4), as well as a control device (1) according to one of the preceding claims, wherein each support (3) is extendable and/or retractable by a respective drive system.

6. User terminal (5) for connection to a control device (1) according to one of claims 1 to 4, **characterized in that** the user terminal (5) is configured to receive signals from the control device (1) about the power consumption of the drive system (4) and based thereon to calculate control signals for the drive system (4) and to output them to the control unit (1).

7. User terminal (5) according to claim 6, **characterized by** at least one second position sensor (7).

8. User terminal (5) according to one of claims 6 or 7, **characterized in that** the user terminal (5) is configured to deactivate the drive system (4) when a predefined value of the power consumption is exceeded.

9. User terminal (5) according to one of claims 6 to 8, **characterized in that** the user terminal (5) is a smartphone.

10. A method for controlling at least one drive system (4) of a platform (2), comprising the steps:
- connecting a user terminal (5) to a control unit (1) connected to the drive system (4), a power supply being connectable to the drive system (4) by the control device and/or the energy supply being disconnectable from the drive system (4),
- outputting, in particular repeatably outputting, of at least one control signal for the drive device (4) from the user terminal (5) to the control unit (1),
- receiving a detected power consumption of the drive system (4) by the user terminal (5), the power consumption being detectable by the control device (1) and being transmittable to the user terminal, and
- checking the power consumption by the user terminal (5) and transmitting a control signal to the control unit (1) to disconnect the power supply from the drive system (4) when a current value of the power consumed exceeds a predefined value.

11. The method according to claim 10, **characterized by** the additional steps:
- determining a target position of the platform (2) relative to a base of the platform (2) by the user terminal (5), and
repeated performing the following steps until the target location matches a current location of the platform:
- detecting signals from a position sensor (6, 7) and calculating the current position of the platform (2) from the detected signals by the user terminal (5),
- calculating, by the user terminal (5), control signals for the drive system (4), by which a support (3) being drivable via the drive system (4) is movable,
- outputting the control signals to the control unit (1).

12. The method according to any one of claims 10 or 11, **characterized by** the additional steps:
- calculating and outputting at least one control signal for retracting a support (3) being drivable by the drive system (4) from the user terminal (5) to the control unit (1),
- recording a course of the detected power consumption of the drive system (4) over an operating time of the drive system (4) by the user terminal (5), and
- sending a control signal to the control device (1) to disconnect the power supply from the drive system (4) by the user terminal (5) when the power consumption increases and is above the predefined value.

13. The method according to any one of claims 10 to 12, **characterized in that** when comparing the power consumption of the drive system (4) with the predefined value, a power peak occurring at the start of a movement of the drive system (4) remains unconsidered.

14. Computer program product, comprising program code for executing a method according to any one of claims 10 to 13, when the computer program product runs on a computing device.

## Revendications

1. Appareil de commande (1) comprenant
au moins une première interface (8, 9) qui peut être reliée à au moins un système d'entraînement électrique (4) d'une plateforme (2), dans lequel la première interface est aménagée pour relier le système d'entraînement électrique (4) à une alimentation en énergie et/ou le séparer d'une alimentation en énergie ainsi que détecter une puissance absorbée du système d'entraînement (4), et
une seconde interface (19, 20, 21) reliée à la première interface (8, 9) pour l'échange de données, qui peut être reliée à un terminal utilisateur (5), dans lequel la puissance absorbée détectée peut être transmise par le biais de la seconde interface (19, 20, 21) au terminal utilisateur (5) et des signaux de commande peuvent être transmis pour la commande du système d'entraînement (4) depuis le terminal utilisateur (5) à la seconde interface (19, 20, 21).

2. Appareil de commande (1) selon la revendication 1, **caractérisé en ce qu'**une liaison entre le terminal utilisateur (5) et la seconde interface (19, 20, 21) est une liaison sans fil.

3. Appareil de commande (1) selon l'une des revendications précédentes, **caractérisé par** au moins un premier capteur de position (6) qui détecte une position de la plateforme (2), dans lequel des signaux du premier capteur de position (6) peuvent être transmis par le biais de la seconde interface (19, 20, 21) au terminal utilisateur (5).

4. Appareil de commande (1) selon l'une des revendications précédentes, **caractérisé en ce que** l'appareil de commande (1) est aménagé pour séparer le dispositif d'entraînement (4) de l'alimentation en énergie lorsque le terminal utilisateur (5) n'est pas relié à la seconde interface (19, 20, 21).

5. Plateforme (2), en particulier véhicule ou caravane, comprenant au moins un support sortable (3) et au moins un système d'entraînement (4) ainsi qu'un appareil de commande (1) selon l'une des revendications précédentes, dans laquelle respectivement un support (3) peut être sorti et/ou rentré par un système d'entraînement (4).

6. Terminal utilisateur (5) pour la liaison avec un appareil de commande (1) selon l'une des revendications 1 à 4, **caractérisé en ce que** le terminal utilisateur (5) est aménagé pour recevoir depuis l'appareil de commande (1) des signaux concernant la puissance absorbée du système d'entraînement (4) et en se basant dessus calculer des signaux de commande pour le système d'entraînement (4) et les transférer à l'appareil de commande (1).

7. Terminal utilisateur (5) selon la revendication 6, **caractérisé par** au moins un second capteur de position (7).

8. Terminal utilisateur (5) selon l'une des revendications 6 ou 7, **caractérisé en ce que** le terminal utilisateur (5) est aménagé pour désactiver le système d'entraînement (4) en cas de dépassement d'une valeur prédéfinie de la puissance absorbée.

9. Terminal utilisateur (5) selon l'une des revendications 6 à 8, **caractérisé en ce que** le terminal utilisateur (5) est un Smartphone.

10. Procédé de commande d'au moins un système d'entraînement (4) d'une plateforme (2), comprenant les étapes :
- de liaison d'un terminal utilisateur (5) avec un appareil de commande (1) qui est relié au système d'entraînement (4), dans lequel, par l'appareil de commande, une alimentation en énergie peut être reliée au système d'entraînement (4) et/ou l'alimentation en énergie peut être séparée du système d'entraînement (4),
- de transfert, en particulier de transfert répété, d'au moins un signal de commande pour le dispositif d'entraînement (4) par le terminal utilisateur (5) à l'appareil de commande (1),
- de réception d'une puissance absorbée détectée du système d'entraînement (4) par le terminal utilisateur (5), dans lequel la puissance absorbée peut être détectée par l'appareil de commande (1) et peut être transmise au terminal utilisateur, et
- de vérification de la puissance absorbée par le terminal utilisateur (5) et de transmission d'un signal de commande à l'appareil de commande (1) pour la séparation de l'alimentation en énergie du système d'entraînement (4) lorsqu'une valeur actuelle de la puissance absorbée dépasse une valeur prédéfinie.

11. Procédé selon la revendication 10, **caractérisé par** les étapes supplémentaires :
- de détermination d'une position cible de la plateforme (2) par rapport à un fond de la plateforme (2) par le terminal utilisateur (5), et
la réalisation répétée des étapes suivantes jusqu'à ce que la position cible concorde avec une position actuelle de la plateforme :
- la détection de signaux d'un capteur de position (6, 7) et le calcul de la position actuelle de la plateforme (2) par le terminal utilisateur (5) à partir des signaux détectés,
- le calcul de signaux de commande pour le système d'entraînement (4) par le terminal utilisateur (5) par lesquels un support (3) pouvant être entraîné par le système d'entraînement (4) peut être déplacé,
- le transfert des signaux de commande à l'appareil de commande (1).

12. Procédé selon l'une des revendications 10 ou 11, **caractérisé par** les étapes supplémentaires :
- de calcul et de transfert d'au moins un signal de commande pour la rentrée d'un support (3) pouvant être entraîné par le système d'entraînement (4) du terminal utilisateur (5) à l'appareil de commande (1),
- de réception d'une évolution de la puissance absorbée détectée du système d'entraînement (4) sur un temps de fonctionnement du système d'entraînement (4) par le terminal utilisateur (5), et
- d'envoi d'un signal de commande à l'appareil de commande (1) pour la séparation de l'alimentation en énergie du système d'entraînement (4) par le terminal utilisateur (5) lorsque la puissance absorbée augmente et se trouve au-dessus de la valeur prédéfinie.

13. Procédé selon l'une des revendications 10 à 12, **caractérisé en ce qu'**en cas de comparaison de la puissance absorbée du système d'entraînement (4) avec la valeur prédéfinie, une pointe de puissance qui survient à un début d'un mouvement du système d'entraînement (4), reste non prise en compte.

14. Produit de programme informatique comprenant un code de programme pour la réalisation d'un procédé selon l'une des revendications 10 à 13 lorsque le produit de programme informatique s'exécute sur un dispositif informatique.
